# EUROPÄISCHE PATENTANMELDUNG

(11) **EP 1 124 239 A2**
(43) Veröffentlichungstag der Anmeldung: **16.08.2001**
(21) Anmeldenummer: 01250041.9
(22) Anmeldetag: 07.02.2001
(51) Int. Cl.: H01H 3/32

(54) **Längeneinstellbare Anordnung zur Verbindung als Koppelelement in Leistungsschaltern**

(30) Priorität: 11.02.2000 DE 10007401
(71) Anmelder: SIEMENS AKTIENGESELLSCHAFT, 80333 München (DE)
(72) Erfinder: Bach, Michael, 12437 Berlin (DE); Schmidt, Detlev, 12055 Berlin (DE); Sebekow, Michael, 13125 Berlin (DE); Seidler-Stahl, Günter, 13359 Berlin (DE); Thiede, Ingo, 12159 Berlin (DE); Tuerkmen, Sezai, 13629 Berlin (DE)

(57) **Zusammenfassung**

Eine als Koppelelement in Leistungsschaltern geeignete Anordnung (13) besteht aus zwei gegeneinander verstellbaren Armen (14, 15), die um einen gemeinsamen Drehpunkt schwenkbar und in einem beliebigen Winkel zueinander arretierbar sind. In einer zweckmäßigen Ausführungsform sind zwei gegeneinander verstellbare Arme (14, 15) vorgesehen, die sich jeweils von einem ösenförmigen Teil (16, 17) aus erstrecken, wobei jeder der Arme an seinem dem ösenförmigen Teil (16, 17) entgegengesetzten Ende einen parallel zur Achse der Ösenöffnung verlaufenden winkelförmigen Fortsatz (18, 19) mit jeweils einer Bohrung (20,21) aufweist. Die genannten Arme (14,15) sind vorzugsweise durch eine Stirnverzahnung arretierbar, wobei die gewählte Winkelstellung der Arme (14, 15) mittels eines durch die ösenförmigen Teile (16, 17) geführten Schraubenbolzens (22) und einer zugehörigen Mutter (23) aufrechterhalten wird.

## Beschreibung

Längeneinstellbare Anordnung zur Verbindung als Koppelelement in Leistungsschaltern.

Die Erfindung betrifft eine längeneinstellbare Anordnung, die als Koppelelement zur Verbindung der Schaltwelle eines Niederspannungs-Leistungsschalters mit dem Schaltpol desselben dient.

Bei Niederspannungs-Leistungsschaltern, insbesondere bei Geräten mit hoher Schaltleistung, ist es erforderlich, die Geometrie des Schaltpoles möglichst präzise einzuhalten, um Überdimensionierungen verschiedenster Art zu vermeiden und die einwandfreie Funktion zu gewährleisten. Dabei kommt dem Koppelelement zwischen der Schaltwelle und dem Schaltpol, also dem Kontaktträger, eine besondere Bedeutung zu. Vom Druckmaß dieses Koppelelementes sind nämlich charakteristische Größen, wie die Kontaktkraft, der Durchdruck, die Kontaktöffnung und andere direkt abhängig. Da, beispielsweise toleranzbedingte Schwankungen, die durchaus auch in Abhängigkeit der Charge der Gehäusekomponenten unterschiedliche Werte annehmen können, zweckmäßig ausgeglichen werden sollten, ist der Einsatz eines einstellbaren Koppelelementes vorteilhaft.

Leistungsschalter besitzen herkömmlich eine drehbar gelagerte Schaltwelle, die mittels eines Federspeichers oder sonstigen Schalterantriebs um einen bestimmten Winkel zum Ein- und Ausschalten schwenkbar ist, und von dieser Schaltwelle ausgehende einzelne weiterführende Hebel, die dann die einzelnen Schaltpole oder Kontakte betätigen. Zwischen der Schaltwelle und den Schaltpolen befinden sich Hebelketten, die im einfachsten Fall aus einer gelenkig mit dem bewegbaren Kontaktträger jedes Schaltpoles verbundenen Gelenklasche und einem an der Schaltwelle befindlichen Hebelausleger bestehen. Ein Koppelbolzen verbindet den Hebelausleger und die Gelenklasche. In einem derartigen System ist eine verhältnismäßig exakte Abstimmung der Wege erforderlich. Das bedeutet, die Schaltwelle erhält von ihrer zugeordneten Antriebsvorrichtung einen bestimmten Drehwinkel vorgegeben und dieser Drehwinkel muß einer genau passenden Bewegung der Schaltkontakte entsprechen. Dieser Wert muß exakt eingehalten werden. Ist der Wert zu groß, werden die in dem Schaltkontakt befindlichen Federn zu stark zusammengedrückt oder die Kontakte werden über den Federungsbereich der Federn hinausbewegt, was bedeutet, dass das System blockiert. Ist der Wert zu gering, kommt die erforderliche Kontaktkraft nicht zustande. Die Kontakte können dann durch elektrodynamische Kräfte vorzeitig abheben.

Diese Überlegungen haben dazu geführt, dass in irgendeiner Weise eine Einstellung in diesem System vorgesehen werden sollte, und zwar genau im Verlauf der Hebelanordnung zwischen der Schaltwelle und dem Schaltkontakt.

Zur Erreichung dieses Zieles wurde in der US-PS 3,236,967 vorgeschlagen, an der Schaltwelle einen Fortsatz mit einem Gewinde vorzusehen, in welches ein gabelartiger Ausleger eingeschraubt ist, der beim Drehen um jeweils eine halbe Umdrehung eine bestimmte Änderung seiner Länge bewirkt. Das ergibt bei einem gleichbleibenden Drehwinkel der Schaltwelle einen um einen entsprechenden Wert verlängerten oder verkürzten Weg für die Betätigung des Kontaktträgers.

Die Änderung der Länge des Hebelarmes führt aber nicht nur zu einer Veränderungen des Weges, sondern auch zu einer Veränderung der ausgeübten Kraft. Da die Drehkraft der Schaltwelle konstant ist, kann dies zu einer unerwünschten Veränderung der Kontaktkraft führen.

Die US-PS 3,569,652 zeigt das übliche System, bestehend aus einer Schaltwelle, einem Ausleger, und einer mit dem Kontaktträger verbundenen Kuppellasche. Hier weist die Kuppellache einen mit einer Kontermutter ausgestatteten Gewindebolzen auf. Der Bolzen wird den Erfordernissen entsprechend hinein oder herausgeschraubt, mit der Mutter gekontert, und bietet somit eine entsprechende Einstellmöglichkeit. Bei einer Einstellung bei zusammengebautem Schalter muß hier die Verbindung am Ausleger der Schaltwelle oder am Kontaktträger demontiert werden.

Eine andere Möglichkeit der Einstellung zeigt die EP A 0 853 326. Hier wird von einer Einstellung im Zuge des Auslegers der Schaltwelle und der Koppellasche abgesehen, sondern es wird das Schaltwellenlager insgesamt verstellt. Damit werden natürlich bei mehrpoligen Schaltern alle Pole gemeinsam beeinflusst, es sei denn die Anordnung wird bewusst etwas exzentrisch ausgebildet, dann könnten die einzelnen Pole einzeln eingestellt werden. Die Einstellung ist aber kompliziert, da durch die starre Schaltwelle die einzelnen Pole gegenseitig beeinflusst werden.

Alle vorgenannten Lösungen sind darüber hinaus konstruktiv und fertigungstechnisch verhältnismäßig aufwendig und materialintensiv.

Die Aufgabe der vorliegenden Erfindung besteht folglich darin, eine längeneinstellbare Anordnung zu schaffen, die als Koppelelement zur Verbindung der Schaltwelle eines Niederspannungs-Leistungsschalters mit dem Schaltpol desselben dient, welche in ihrem konstruktiven Aufbau einfach und nicht materialintensiv ist.

Diese Aufgabe wird gemäß der vorliegenden Erfindung dadurch gelöst, dass in die Hebelkette zwischen der Schaltwelle und dem Kontaktträger eines herkömmlichen Niederspannungs-Leistungsschalters eine längeneinstellbare Anordnung als Koppelelement eingefügt wird, die zwei gegeneinander verstellbare Arme aufweist, die um einen gemeinsamen Drehpunkt schwenkbar und in einem beliebigen Winkel zueinander arretierbar sind.

Vorteilhaft ist diese Anordnung aus zwei gegeneinander verstellbaren Armen gebildet, die sich jeweils von einem ösenförmigen Teil aus erstrecken, wobei jeder der Arme an seinem dem ösenförmigen Teil entgegengesetzten Ende einen sich parallel zur Ösenöffnung erstreckenden winkelförmigen Fortsatz mit jeweils einer Bohrung aufweist. Diese Bohrungen dienen zur Befestigung der Vorrichtung am Schaltwellenhebel und am Kontaktträger. Die genannten Arme sind mittels eines durch die ösenförmigen Teile geführten Schraubenbolzens schwenkbar miteinander verbunden. Die Anordnung wird mittels einer auf den Schraubenbolzen aufgeschraubten Mutter zusammengehalten. Dieser Schraubenbolzen bildet somit einen gemeinsamen Drehpunkt, um welchen die Arme schwenkbar und durch das Festziehen der Mutter in einem beliebigen Winkel zueinander arretierbar und fixierbar sind.

Um eine sichere Arretierung der Winkelstellung der Arme zu gewährleisten, sind die ösenförmigen Teile beider Arme am gemeinsamen Drehpunkt an ihren Berührungsflächen mit je einer Stirnverzahnung aus ineinander greifenden Nuten und Fortsätzen versehen. Derartige Verzahnungen sind allgemein als Hirth-Verzahnungen bekannt. Mittels dieser Anordnung werden die beiden verstellbaren Arme nach ihrer entsprechenden Einstellung zueinander zusammengezogen, wodurch die Stirnverzahnungen beider Arme miteinander in Eingriff kommen und eine gegen Verdrehen völlig unverrückbare Verbindung ergeben. Eine Veränderung ist nicht möglich, da sich eine quasi materialschlüssige Verbindung ergibt, wenn die beiden Teile zusammengeschraubt sind. Es ist aber, bedingt durch die Feinheit der Stirnverzahnung, trotzdem eine feine Teilung für die Verstellung gegeneinander möglich und damit eine feine Längenabstimmung, denn durch Verdrehen um eine Zahnteilung wird nur eine geringe Längenveränderung bewirkt.

Zur exakten Einstellung und Kontrolle der Veränderung sind auf beiden verstellbaren Armen an der Berührungsseite am gemeinsamen Drehpunkt miteinander korrespondierende Teilstrichmarkierungen vorgesehen. Abhängig davon, wie viele Teilstriche der Markierungen einander gegenüberstehen, kann der Grad der Verstellung gegeneinander festgestellt und bei einer gewünschten Veränderung kontrolliert werden.

Der Schraubenbolzen und die Mutter, die den gemeinsamen Drehpunkt für die gegeneinander verstellbaren Arme bilden, sind vorteilhaft mit geeigneten, an sich bekannten, Sicherungselementen gegen ein Lockern versehen oder auch mit einem Feingewinde ausgebildet.

Die Erfindung soll nachfolgend zum besseren Verständnis anhand eines bevorzugten, den Schutzumfang nicht einschränkenden Ausführungsbeispiels näher erläutert werden.

Die Figur 1 zeigt schematisch einen Niederspannungs-Leistungsschalter im Schnitt.

Die Figur 2 zeigt eine bevorzugte Ausführungsform der erfindungsgemäßen längenverstellbaren Anordnung.

Die Figur 3 zeigt eine schematische Draufsicht auf die erfindungsgemäße Anordnung.

Die Figur 4 zeigt eine weitere schematische Draufsicht auf die erfindungsgemäße Anordnung.

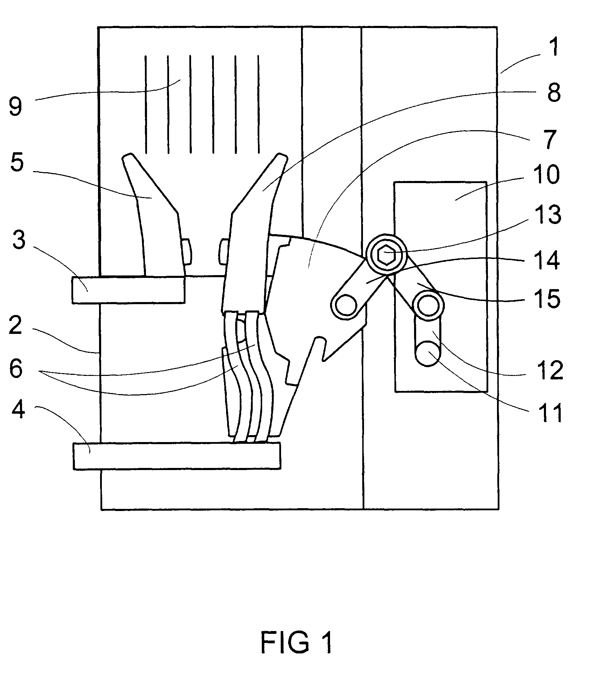

In der Figur 1 ist schematisch ein Niederspannungs-Leistungsschalter 1 im Schnitt dargestellt, um den Einbauort der erfindungsgemäßen Anordnung 13 zu verdeutlichen. Durch die Rückwand 2 des Niederspannungs-Leistungsschalters 1 sind die obere Anschlussschiene 3 und die untere Anschlussschiene 4 hindurchgeführt. An der oberen Anschlussschiene 3 befindet sich der feste Schaltkontakt 5 und an der unteren Anschlussschiene 4 ist über flexible Verbindungen 6 der auf einem Kontaktträger 7 befindliche bewegbare Schaltkontakt 8 angeschlossen. Über dem festen Schaltkontakt 5 und dem bewegbaren Schaltkontakt 8 ist die Lichtbogenlöschkammer 9 angeordnet. Im Schalterantrieb 10 befindet sich die Schaltwelle 11 mit dem Schaltwellenhebel 12, an welchem die erfindungsgemäße längeneinstellbare Anordnung 13 als Verbindungselement zum Kontaktträger 7 befestigt ist. Durch eine Veränderung des Winkels zwischen den beiden gegeneinander verstellbaren Armen 14 und 15 der Anordnung 13 wird eine Längenänderung in der Verbindung zwischen dem

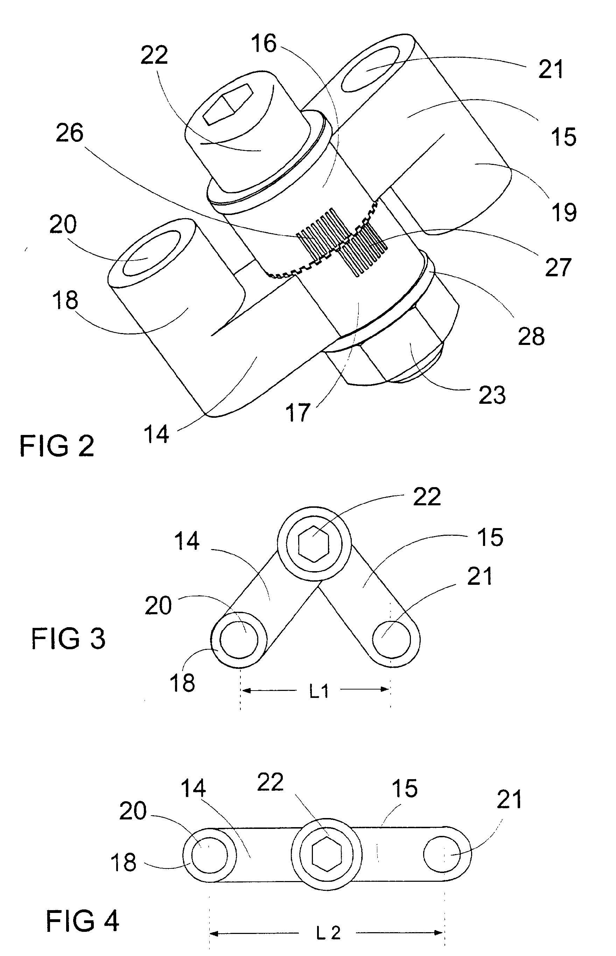

Schaltwellenhebel 12 und dem Kontaktträger 7 bewirkt, wie das anhand der Figuren 3 und 4 nachstehend gezeigt ist.

Die Figur 2 zeigt eine bevorzugte Ausführungsform der erfindungsgemäßen längenverstellbaren Anordnung 13.

Sie besteht in der gezeigten vorteilhaften Ausführungsform aus zwei gegeneinander verstellbaren Armen 14, 15, die sich jeweils von einem ösenförmigen Teil 16, 17 aus erstrecken und jeder am vom ösenförmigen Teil 16, 17 entgegengesetzten Ende einen in Richtung der nicht sichtbaren Ösenöffnung verlaufenden winkelförmigen Fortsatz mit jeweils einer Bohrung 20, 21 aufweisen.

Diese Bohrungen 20, 21 dienen zur Befestigung der Vorrichtung 13 am Schaltwellenhebel 12 und am Kontaktträger 7. Diese Arme 14, 15 sind mittels eines durch die ösennförmigen Teile 16, 17 geführten Schraubenbolzen 22 schwenkbar miteinander verbunden. Die Anordnung 13 wird mittels einer Mutter 23 zusammengehalten. Der genannte Schraubenbolzen 22 bildet somit einen gemeinsamen Drehpunkt, um welchen die Arme 14, 15 schwenkbar und durch das Festziehen der Mutter 23 in einem beliebigen Winkel zueinander arretierbar und fixierbar sind.

Um eine sichere Arretierung der Winkelstellung der Arme 14, 15 zu gewährleisten, sind an ihren Berührungsflächen an den ösenförmigen Teilen 16, 17 beider Arme am gemeinsamen Drehpunkt Stirnverzahnungen 24, 25 aus ineinander greifenden Nuten und Fortsätzen vorgesehen.

Zur exakten Einstellung und Kontrolle der Veränderung sind auf beiden ösenförmigen Teilen 16, 17 der verstellbaren Arme an der Berührungsseite am gemeinsamen Drehpunkt miteinander korrespondierende Teilstrichmarkierungen 26, 27 vorgesehen. Abhängig davon, wie viele Teilstriche der Teilstrichmarkierungen 26, 27 einander gegenüberstehen, kann der Grad der Verstellung gegeneinander festgestellt und bei einer gewünschten Veränderung kontrolliert werden. Der Schraubenbolzen 22 und die Mutter 23, die den gemeinsamen Drehpunkt für die gegeneinander verstellbaren Arme 14, 15 bilden, sind mit einem Federring 28 gegen ein Lockern gesichert.

Die Figur 3 zeigt zur Verdeutlichung eine schematische Draufsicht auf die erfindungsgemäße Anordnung 13 im gestreckten Zustand, also derart eingestellt, dass die größtmögliche Länge L1 erreicht wird und die Figur 4 zeigt in einer weiteren schematische Draufsicht auf die erfindungsgemäße Anordnung 13 im zu einem bestimmten Winkel zusammengeklappten Zustand, in welchem die Länge auf einen Wert L2 reduziert ist.

## Patentansprüche

1. Längeneinstellbare Anordnung als Koppelelement zur Verbindung der Schaltwelle eines Niederspannungs-Leistungsschalters mit seinem Schaltpol
**dadurch gekennzeichnet,**
dass sie aus zwei gegeneinander verstellbaren Armen (14, 15) besteht, die um einen gemeinsamen Drehpunkt schwenkbar und in einem beliebigen Winkel zueinander arretierbar sind.

2. Anordnung nach Anspruch 1,
**dadurch gekennzeichnet,**
dass sie aus zwei gegeneinander verstellbaren Armen (14, 15) gebildet ist, die sich jeweils von einem ösenförmigen Teil (16, 17) aus erstrecken, wobei jeder der Arme an seinem dem ösenförmigen Teil (16, 17) entgegengesetzten Ende einen sich parallel zur Ösenöffnung erstreckenden winkelförmigen Fortsatz mit jeweils einer Bohrung (20, 21) aufweist und die Arme (14, 15) mittels eines sich durch die ösenförmigen Teile (16, 17) geführten Schraubenbolzens (22) und einer zugehörigen Mutter (23) zusammengehalten sind, derart, dass die Arme (14, 15) durch das Festziehen der Mutter (23) in einem beliebigen Winkel zueinander arretierbar sind.

3. Anordnung nach Anspruch 1 oder 2,
**dadurch gekennzeichnet,**
dass die ösenförmigen Teile (16, 17) beider Arme (14, 15) am gemeinsamen Drehpunkt an ihren Berührungsflächen mit je einer Stirnverzahnung (24, 25) aus ineinander greifenden Nuten und Fortsätzen versehen ist.

4. Anordnung nach einem der vorangehenden Ansprüche,
**dadurch gekennzeichnet,**
dass auf beiden verstellbaren Armen (14, 15) an der Berührungsseite am gemeinsamen Drehpunkt, einander gegenüberstehend, miteinander korrespondierende Teilstrichmarkierungen (26, 27) vorgesehen sind.

5. Anordnung nach einem der Ansprüche 2 bis 4,
**dadurch gekennzeichnet,**
dass der Schraubenbolzen (22) und die Mutter (23), die den gemeinsamen Drehpunkt für die gegeneinander verstellbaren Arme (14, 15) bilden, mit geeigneten, an sich bekannten Sicherungselementen gegen ein Lockern versehen sind.

6. Anordnung nach einem der Ansprüche 2 bis 5,
**dadurch gekennzeichnet,**
dass der Schraubenbolzen (22) und die Mutter (23), die den gemeinsamen Drehpunkt für die gegeneinander verstellbaren Arme (14, 15) bilden, mit einem Feingewinde versehen sind.
